# FASCICULE DE BREVET EUROPEEN

(11) **EP 1 075 406 B1**
(45) Date de publication et mention de la délivrance du brevet: **03.09.2003**
(21) Numéro de dépôt: 00907733.0
(22) Date de dépôt: 25.02.2000
(51) Int. Cl.: B60T 11/236, F16D 25/12

(54) **DISPOSITIF PERFECTIONNE DE COMMANDE HYDRAULIQUE D'UN EMBRAYAGE, NOTAMMENT POUR VEHICULE AUTOMOBILE**
VERBESSERTER HYDRAULISCHER HAUPTKUPPLUNGSZYLINDER, INSBESONDERE FÜR FAHRZEUGE
IMPROVED HYDRAULIC CONTROL DEVICE FOR CLUTCH IN PARTICULAR FOR MOTOR VEHICLES

(30) Priorité: 26.02.1999 FR 9902426; 09.06.1999 FR 9907269
(43) Date de publication de la demande: 14.02.2001
(73) Titulaire: VALEO, 75017 Paris (FR)
(72) Inventeur: ANGIONE, Pasquale, F-75019 Paris (FR)
(86) Numéro de dépôt international: FR0000482
(87) Numéro de publication internationale: WO00050282

(56) Documents cités:
- FR-A- 2 741 920
- US-A- 4 998 461

## Description

L'invention concerne un dispositif de commande hydraulique de freinage ou d'un embrayage, notamment pour véhicule automobile, comportant au moins un cylindre émetteur ou récepteur muni d'un piston.

L'invention concerne plus particulièrement un dispositif de commande hydraulique de freinage ou d'un embrayage de véhicule automobile comprenant au moins un cylindre comportant un corps de cylindre présentant à l'avant un fond et ouvert à l'arrière, un piston coulissant axialement dans un alésage interne du corps de cylindre, au moins un joint dynamique d'étanchéité porté par le corps du cylindre pour coopérer avec la périphérie externe de piston, dans lequel le corps de cylindre est en matière synthétique telle que de la matière plastique, et dans lequel le piston présente une face avant délimitant une chambre hydraulique.

Un tel dispositif est décrit, par exemple dans les documents DE-U-295 16 488, FR-B-274920 ou dans la demande de brevet français n°98.07213 du 9 juin 1998.

L'invention a pour but de proposer un dispositif de commande du type mentionné ci-dessus dont les coûts de fabrication soient réduits en simplifiant la conception du corps de cylindre.

Dans ce but, le dispositif de commande selon l'invention est caractérisé en ce que le corps de cylindre comporte, agencées axialement consécutivement d'avant en arrière, une pièce avant borgne comportant ledit fond, une pièce centrale, et une pièce arrière ouverte vers l'arrière qui sont fixées entre elles de manière étanche, en ce que l'alésage interne comporte une portion avant et une portion arrière qui sont formées dans la pièce avant et, respectivement, dans la pièce arrière du corps de cylindre, et en ce que ledit joint dynamique d'étanchéité est logé dans la pièce centrale du corps de cylindre.

Grâce à une telle conception, il est notamment possible de standardiser les pièces avant et arrière du corps de cylindre et de constituer une gamme de produits en réalisant une gamme de pièces centrales qui diffèrent les unes des autres notamment pour incorporer des moyens d'alimentation de la chambre hydraulique et des moyens de fixation du dispositif de commande qui varient d'un dispositif à l'autre en fonction notamment du modèle et du type de véhicule à équiper.

Selon d'autres caractéristiques de l'invention :
- ladite fixation étanche est une fixation par collage
- ladite fixation étanche est une fixation réalisé par soudage avec apport indirect de chaleur
- ladite fixation étanche est une fixation réalisé par soudage à l'aide d'au moins une source d'énergie du type laser ;
- ladite fixation étanche est une fixation par soudage par rayonnement infrarouge, par exemple du type laser ;
- ladite fixation étanche est une fixation par soudage par ultrasons ;
- ladite fixation étanche est une fixation par soudage par frottement ;
- ladite fixation étanche est une fixation par soudage par haute fréquence ;
- ladite fixation étanche est une fixation par soudage par induction de joints ferromagnétiques ;
- ladite fixation étanche est une fixation par soudage par miroir ;
- le piston s'étend à travers la pièce centrale du corps de cylindre avec jeu radial ;
- un tronçon tubulaire arrière, respectivement avant, d'orientation axiale de la pièce avant, respectivement arrière, du corps de cylindre est soudé à une partie avant, respectivement arrière, complémentaire de la pièce centrale du corps de cylindre ;
- la surface périphérique externe dudit tronçon tubulaire est fixée de manière étanche par soudage avec apport indirect de chaleur à une surface périphérique interne de ladite partie complémentaire de la pièce centrale du corps de cylindre ;
- la surface périphérique interne dudit tronçon tubulaire est fixée de manière étanche par soudage avec apport indirect de chaleur à une surface périphérique externe de ladite partie complémentaire de la pièce centrale du corps de cylindre ;
- ledit tronçon tubulaire est en butée axialement contre un épaulement radial de la pièce centrale du corps de cylindre ;
- la pièce centrale comporte un conduit transversal qui débouche, selon une direction sensiblement radiale, dans un trou central, d'orientation axiale, de la pièce centrale en regard de la périphérie externe du piston ;
- la pièce centrale du corps de cylindre est conformée en une plaque transversale de fixation du dispositif de commande ;
- le dispositif comporte deux joints dynamiques d'étanchéité avant et arrière qui sont logés dans la pièce centrale du corps de cylindre ;
- le joint dynamique d'étanchéité avant, respectivement arrière, est disposé dans un logement formé dans pièce centrale du corps de cylindre qui est ouvert radialement vers l'intérieur ;
- l'extrémité arrière de la pièce arrière du corps de cylindre comporte au moins une butée destinée à coopérer avec une extrémité arrière du piston pour limiter le déplacement axial du piston vers l'arrière ;
- le piston comporte une chemise périphérique de piston solidaire axialement du piston et qui coulisse axialement dans l'alésage interne du corps de cylindre ;
- la chemise de piston présente au moins un trou pour assurer une communication entre l'intérieur et l'extérieur de la chemise de piston, et le trou est destiné à se déplacer de part et d'autre d'un joint dynamique d'étanchéité ;
- la chemise de piston est métallique.

D'autres caractéristiques et avantages de l'invention apparaîtront à la lecture de la description détaillée qui suit pour la compréhension de laquelle on se reportera aux dessins annexés dans lesquels :
- la figure 1 est une vue en section axiale longitudinale d'un premier mode de réalisation d'un cylindre émetteur réalisé conformément aux enseignements principe l'invention et sur laquelle le piston est représenté dans une position reculée ;
- la figure 2 est une vue de détail à plus grande échelle de la partie centrale du cylindre émetteur de la figure 1 qui illustre la fixation étanche des trois pièces du corps de cylindre; et
- la figure 3 est une vue similaire à celle de la figure 2 qui illustre un deuxième mode de réalisation de l'invention.

Dans la description qui va suivre, les éléments identiques, similaires ou analogues seront désignés par les mêmes signes de référence.

Sur les figures, on a représenté un cylindre de commande sous la forme d'un émetteur d'un dispositif de commande d'un embrayage de véhicule automobile.

Un tel dispositif (non représenté) comporte un cylindre émetteur relié par une conduite à un cylindre récepteur de structure similaire au cylindre émetteur.

Chaque cylindre récepteur ou émetteur comporte un piston mobile axialement à l'intérieur d'un corps de cylindre pour délimiter une chambre hydraulique de volume variable. Un orifice de raccordement, sur lequel se branche la conduite, débouche dans la chambre hydraulique.

Le cylindre émetteur comporte une tige de piston reliée par exemple à une pédale d'embrayage sur laquelle agit le conducteur ou un actionneur dont la mise en route est réalisée selon des programme prédéterminés.

Le piston du cylindre émetteur est destiné à expulser un fluide, tel que de l'huile, contenu dans la chambre hydraulique en direction de la canalisation ou conduite qui relie le cylindre émetteur au cylindre récepteur.

Lorsque l'embrayage est engagé, le volume de la chambre hydraulique du cylindre émetteur est maximum tandis que le volume de la chambre de commande du cylindre récepteur est minimum.

Lors de l'opération de débrayage, le volume de la chambre hydraulique du cylindre émetteur diminue, tandis que le volume de la chambre de commande du cylindre récepteur augmente.

Le piston du cylindre récepteur agit alors sur une tige agissant, par exemple, sur la fourchette de débrayage actionnant la butée de débrayage, que comporte l'embrayage à friction.

En variante le piston agit en traction par l'intermédiaire d'un câble ou autre moyen sur ladite fourchette.

Chaque cylindre émetteur et récepteur comporte un ressort agissant entre le piston et le fond du corps du cylindre. Lorsque le conducteur relâche son action sur la pédale de débrayage ou lorsque l'actionneur revient à sa position initiale d'embrayage, le ressort de rappel du cylindre émetteur se détend pour ramener le piston à sa position initiale tandis que le ressort de rappel du cylindre émetteur est comprimé par le ressort d'embrayage, tel qu'un diaphragme, qui ramène ainsi le piston du cylindre récepteur à sa position initiale.

Sur les figures, le cylindre émetteur 10 est représenté en position de livraison et comporte un corps de cylindre 17 doté d'un orifice d'entrée 18 obturé par un bouchon 19. C'est par l'intermédiaire de cet orifice d'entrée que la conduite ou canalisation (non représentée), reliant le cylindre récepteur (non représenté) au cylindre émetteur 10, débouche dans la chambre hydraulique 20 du cylindre émetteur.

La chambre 20 est à volume variable et elle est délimitée par le corps 17 et le piston 21 monté mobile axialement à l'intérieur du corps du cylindre 17.

Le corps de cylindre 17 a une forme générale tubulaire et, conformément aux enseignements de l'invention, il est constitué de trois pièces distinctes réalisées séparément par moulage en matériaux plastiques qui sont disposées axialement d'avant en arrière, c'est-à-dire de la gauche vers la droite en considérant les figures et parmi lesquelles on distingue une pièce avant 17A comportant l'orifice 18 et le bouchon 19 à son extrémité axiale avant, une pièce centrale ou intermédiaire 17B et une pièce arrière 17C.

Ce corps de cylindre 17 en trois pièces 17A, 17B et 17C comporte un alésage interne 22 de forme générale borgne et d'axe X-X, correspondant à l'axe de symétrie générale du corps de cylindre 17, avec à l'avant un fond 24 d'orientation transversale, dans lequel débouche l'orifice d'entrée 18 appartenant à un raccord 25 permettant de brancher la conduite mentionnée précédemment, par exemple par brochage, le raccord 25 présentant à cet effet intérieurement des passages 26 pour le passage d'une épingle permettant de raccorder la conduite au cylindre émetteur. En variante, le raccord peut être du type à vis.

Le corps de cylindre 17 est globalement ouvert à l'arrière, c'est-à-dire que sa pièce arrière 17C est elle-même ouverte vers l'arrière.

Chacune des deux pièces d'extrémité axiale, c'est-à-dire la pièce avant 17A et la pièce arrière 17C, se présente sous la forme générale d'une pièce tubulaire de conception globalement simple et facile à réaliser par moulage en matériau plastique.

L'alésage interne 22 pour le guidage en coulissement du piston 21 comporte, conformément aux enseignements de l'invention, une portion avant 22A formée dans la pièce avant 17A et une portion arrière 22C formée dans la pièce arrière 17C, les deux portions avant 22A et arrière 22C étant alignées et coaxiales.

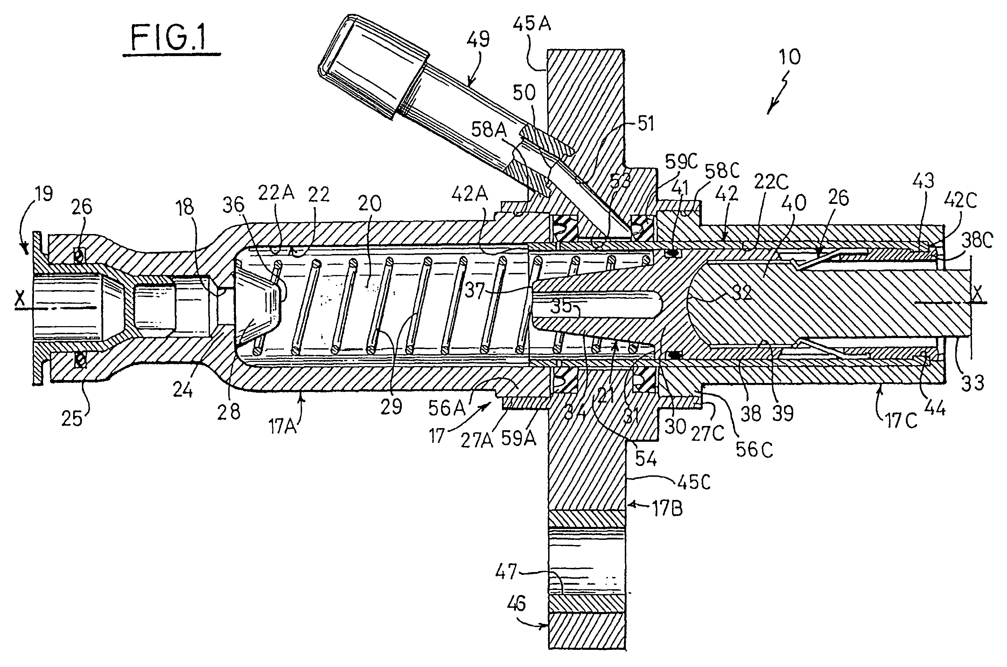

Le piston 21 est susceptible de coulisser dans le corps de cylindre 17, plus précisément dans l'alésage interne 22 de celui-ci, d'arrière en avant en partant de la position reculée de débrayage représentée à la figure 1 vers une position avancée d'embrayage (non représentée).

Dans la position reculée de débrayage illustrée à la figure 1, la chambre hydraulique 20 et le fluide de commande sont pressurisés tandis que, en position avancée, la chambre 20 et le fluide de commande sont dépressurisés.

Une saillie 28, de forme générale tronconique, est réalisée venue de moulage avec le fond transversal 24 et elle s'étend axialement vers l'arrière dans l'alésage 22 pour constituer un centreur pour un ressort 29 de rappel qui est ici un ressort hélicoïdal intervenant entre le corps de cylindre 17 et le piston 21, plus précisément entre le fond transversal 24 et l'avant du piston 21.

Bien entendu, l'orifice 18 traverse le fond 24 et débouche latéralement par rapport à la saillie 28 venue de matière par moulage avec le fond 24.

Le corps du piston 21 est une pièce moulée en matière plastique de forme générale tubulaire et il présente, à sa partie avant, une paroi transversale 30 dont la face transversale avant 31 délimite axialement vers l'arrière la chambre hydraulique 20 et dont une face arrière 32 coopère avec la tête d'une tige de piston 33.

A partir de sa face transversale avant 30, le corps du piston 21 se prolonge axialement vers l'avant par une cheminée 34, qui présente extérieurement un profil tronconique, avec un trou central borgne 35 de forme cylindrique dont le fond, d'orientation axiale, est formé par la face avant 31 de la paroi 30.

Le ressort hélicoïdal de rappel 29 est monté autour de la cheminée 34 dont la base sert de centreur au ressort de rappel 29 dont l'extrémité axiale arrière prend appui sur la face avant 31 de la paroi transversale 30 du piston 21.

Le ressort 29 intervient donc axialement entre le fond 24 et la face avant 31.

La face transversale d'extrémité axiale arrière 36 de la saillie 28 peut constituer une butée avec laquelle est susceptible de coopérer la face transversale d'extrémité axiale avant 37 de la cheminée 34.

Plus précisément, en position avancée, le piston 21 vient en contact par la face avant 37 de la cheminée 34 avec la face 36 de la saillie 28, le corps de cylindre 17 présentant ainsi une butée 28 limitant le déplacement axial vers l'avant du piston 21.

A partir de la paroi transversale 30, le corps tubulaire du piston en matière plastique 21 se prolonge axialement vers l'arrière par une douille 38 comportant un alésage 39 dont le fond avant est délimité par la face arrière 32 de la paroi transversale 30 du piston 21.

Le fond 32 de l'alésage 39 est globalement en forme hémisphérique pour réception de la tête complémentaire 40 formée à l'extrémité axiale avant de la tige de piston 33.

La tête 40, et donc la tige de piston 33, est retenue axialement à l'intérieur de l'alésage 39, et donc par rapport au piston 21, par un élément déformable élastiquement 26 qui ne sera pas décrit ici plus en détail.

La tige 33 est ainsi montée rotulante dans le piston 21, et plus précisément par rapport au fond 32 de la douille 38.

Le piston 21 porte à sa périphérie externe cylindrique un joint statique 41 d'étanchéité de piston qui est ici un joint torique monté dans une gorge radiale intérieure formée dans la périphérie externe cylindrique au droit de la paroi transversale 30. D'autres formes de joints statiques d'étanchéité sont envisageables.

Le joint statique 41 est prévu pour coopérer avec la surface périphérique interne cylindrique d'une chemise de piston 42 qui est ici métallique.

La chemise de piston 42 est un élément tubulaire qui entoure le piston 21 qui est reçu à l'intérieur de la chemise 42.

La chemise de piston 42 est par exemple à base d'aluminium annodisé ou en acier traité. La chemise de piston 42 s'étend vers l'avant en saillie axiale par rapport à la cheminée 34 de telle manière que, en position avancée non représentée, la cheminée 34 est en contact avec la saillie 28, tandis que le bord transversal d'extrémité avant 42A est à distance axiale du fond transversal 24 en vis-à-vis. Les dimensions de la chemise de piston 42 sont telles que la cheminée 34 et le ressort de rappel 29 sont reçus radialement avec jeu à l'intérieur de la chemise de piston 42.

La chemise de piston 42 est en contact intime à sa périphérie interne cylindrique avec la périphérie externe cylindrique du piston 21 et avec la périphérie externe du joint statique d'étanchéité 41.

La chemise de piston 42 est solidaire axialement du piston 21 et ceci d'une part par un effet de serrage radial entre le piston 21 et la chemise du piston 42 avec coopération du joint statique d'étanchéité 41. Pour compléter cette immobilisation axiale relative du piston 21 par rapport à la chemise de piston 42, ainsi qu'en rotation, il est ici proposé que la chemise de piston 42 présente au voisinage de son bord d'extrémité axiale arrière 42C des pattes 44 qui sont reçues en prise dans une gorge de fixation 43 formée radialement vers l'axe X-X dans la partie d'extrémité arrière 38C de la douille 38 du piston 21.

D'autres moyens de liaison axiale et en rotation du piston 21 à la chemise de piston 42 peuvent être envisagés sans sortir du cadre de l'invention.

Dans tous les cas, il est ainsi constitué un sous-ensemble unitaire piston 21-chemise de piston 42 formant un équipage mobile axialement dans l'alésage interne 22 du corps de cylindre 17, la chemise de piston 42 et le piston 21 étant des pièces concentriques et coaxiales d'axe X-X.

Le corps de cylindre est destiné à être fixé sur une partie fixe du véhicule et appartient donc à la partie globalement fixe du cylindre émetteur 10, tandis que le piston 21 avec sa tige de piston 33 appartient à la partie mobile du cylindre émetteur.

Conformément aux enseignements de l'invention, la partie centrale 17B du corps de cylindre 17 est réalisée sous la forme d'une plaque intermédiaire disposée axialement entre les parties avant 17A et arrière 17C du corps 17.

La plaque 17B s'étend transversalement dans un plan d'orientation radiale perpendiculaire à l'axe X-X.

La pièce centrale 17B formant plaque de fixation est réalisée par moulage en matériau plastique et elle peut comporter par exemple des oreilles 46 de fixation comportant des trous 47 pour le passage d'organes de fixation, usuellement de vis, du corps de cylindre 17, et donc du cylindre émetteur 10, sur une partie fixe du véhicule automobile.

On a aussi représenté à la figure 1 un tube 49 solidaire de la pièce centrale 17B du corps de cylindre 17.

Le tube 49 permet de raccorder l'intérieur du corps de cylindre 17 à un réservoir principal de réalimentation (non représenté) qui est monté à l'extérieur du cylindre émetteur 10, les chambres hydrauliques des cylindres émetteur et récepteur étant remplies d'un fluide hydraulique tel que par exemple de l'huile.

Le réservoir est partiellement rempli par le fluide hydraulique et il est raccordé par une conduite, non représentée sur les figures, au tube 49, ce dernier débouchant dans un orifice 50 que présente, dans sa face transversale d'extrémité avant 45A, la pièce centrale 17B. L'orifice 50 est l'une des extrémités d'un canal 51, d'orientation inclinée par rapport à l'axe X-X, qui traverse la pièce centrale 17B depuis sa face transversale avant 45A pour déboucher vers l'arrière et axialement vers l'intérieur dans un trou central cylindrique d'orientation axiale 53 formé dans la partie centrale massive et de forme générale cylindrique annulaire 54 de la pièce centrale 17B qui, comme cela sera expliqué par la suite en détail, est sensiblement coaxiale et concentrique aux portions avant 22A et arrière 22C de l'alésage interne 22, le diamètre intérieur du trou cylindrique 53 étant ici supérieur au diamètre intérieur de l'alésage 22 de manière que la surface périphérique externe cylindrique de la chemise de piston 42 traverse le trou 53 avec un jeu radial entre ces deux éléments.

La fixation du tube 49 à la pièce centrale 17B est réalisée par emmanchement de son extrémité arrière dans un logement complémentaire formé dans la face transversale avant 45A de la pièce centrale 17B, puis par exemple par une opération de soudage avec apport indirect de chaleur.

Dans ce but, le tube 49 est bien entendu réalisé dans un matériau plastique compatible avec celui dans lequel est moulée la pièce centrale 17B du corps de cylindre 17.

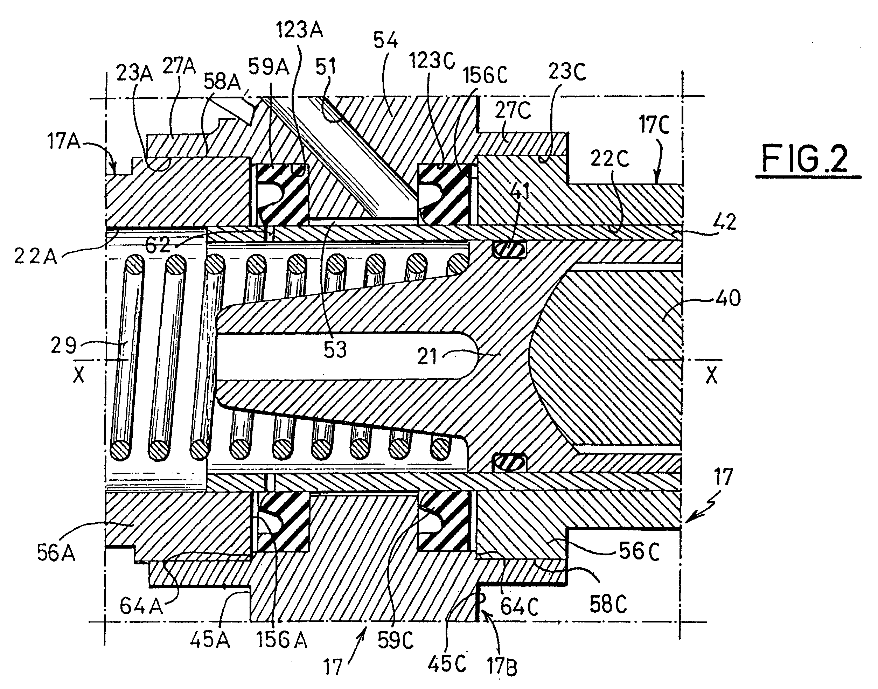

En référence aux figures 1 et 2, on décrira maintenant le premier mode de réalisation selon l'invention des moyens de raccordement et de fixation étanche entre les trois pièces constitutives du corps de cylindre 17.

Selon le premier mode de réalisation illustré aux figures 1 et 2, l'extrémité axiale arrière 56A, respectivement avant 56C, de la pièce avant 17A, respectivement de la pièce arrière 17C, est réalisée sous la forme d'un tronçon tubulaire massif dont l'épaisseur radiale est légèrement supérieure à celle de la partie principale tubulaire de la pièce avant 17A, respectivement de la pièce arrière 17C, les deux tronçons tubulaires 56A et 56C présentant de préférence les mêmes dimensions radiales, c'est-à-dire notamment les mêmes diamètres extérieurs et intérieurs.

Chaque tronçon tubulaire 56A, 56C est reçu axialement dans un logement complémentaire formé en vis-à-vis dans la pièce centrale 17B.

Plus précisément, la partie centrale massive 54 de la pièce centrale 17B en forme de plaque comporte deux douilles ou viroles avant 27A et arrière 27C qui s'étendent respectivement axialement vers l'avant et vers l'arrière à partir des faces transversales opposées avant 45A et arrière 45C de la pièce centrale 17B.

Chaque virole 27A, 27C est de forme générale annulaire cylindrique et réalisée venue de matière par moulage avec la partie centrale massive 54 de la pièce centrale 17B et elle délimite une surface périphérique cylindrique interne 23A, 23C qui débouche axialement vers l'avant, respectivement vers l'arrière, et qui est délimitée axialement vers l'arrière, respectivement vers l'avant, par un épaulement transversal avant 64A, respectivement arrière 64C. dont chacun constitue une butée axiale qui détermine la position axiale relative de la pièce avant 17A, respectivement arrière 17C, par rapport à la pièce centrale 17B grâce à la venue en butée contre cet épaulement 64A, 64C de la face transversale d'extrémité arrière 156A, respectivement avant 156C, du tronçon tubulaire arrière 56A, respectivement avant 56C.

Les logements cylindriques 23A et 23C déterminent ainsi avec précision la position axiale relative des pièces avant 17A et arrière 17C du corps de cylindre 17 ainsi que l'alignement et la parfaite coaxialité des portions avant 22A et arrière 22C de l'alésage interne 22 du corps de cylindre 17 dans lequel est montée coulissante la chemise de piston 42.

Chaque tronçon tubulaire 56A, 56C est emmanché axialement dans la douille correspondant 27A, 27C jusqu'à la venue en butée axiale des faces 156A, 156C avec les épaulements 64A et 64C.

La fixation étanche des pièces avant 17A et arrière 17C sur la pièce centrale 17B est, conformément aux enseignements de l'invention, obtenue grâce à une opération de soudage, avec apport indirect de chaleur, des tronçons tubulaires 56A, 56C dans les logements 23A, 23C.

Grâce à la conception selon l'invention, la zone de soudage étanche 58A, 58C correspond à l'interface entre les surfaces cylindriques périphériques externes des tronçons tubulaires 56A, 56C et les surfaces périphériques cylindriques internes 23A, 23C des douilles 27A, 27C.

La zone de soudage 58A, 58C dans laquelle on effectue l'opération de soudage avec apport indirect de chaleur est ainsi très précise et limitée sans que l'opération de soudage n'ait d'impact nuisible sur les autres parties et autres composants de l'émetteur 10.

La conception selon le mode de réalisation illustré aux figures 1 et 2 est plus particulièrement adaptée à la réalisation d'un assemblage et d'une fixation étanche par une opération de soudage par rayonnement infrarouge.

A cet effet, la pièce centrale 17B selon l'invention est réalisée par moulage dans un matériau plastique transparent aux rayons infrarouges, tandis que les pièces d'extrémité avant 17A et arrière 17C sont de préférence réalisées dans un matériau plastique qui absorbe les rayons infrarouges, par exemple un matériau plastique transparent identique à la pièce 17B et qui est doté d'au moins un additif tel que du charbon avec une teneur de 1 à 2 % pour le rendre absorbant auxdits rayons infrarouges.

A titre de variante, et en faisant appel à des procédés de moulage bi-matières, seules les parties prévues pour être soudées ensemble sont réalisées dans les matériaux transparents ou absorbant les rayons infrarouges.

L'opération de soudage par rayonnement infrarouge est alors par exemple réalisée au moyen d'un faisceau laser qui provoque le soudage des zones d'interface 58A, 58C.

L'invention n'est pas limitée à l'opération de soudage étanche par rayonnement infrarouge.

Il est aussi possible de réaliser cette fixation étanche par soudage par ultrasons, par soudage par haute fréquence ou par induction de joints ferromagnétiques, ceux-ci pouvant être notamment réalisés en introduisant de petites particules ferromagnétiques directement dans les parties à souder.

En variante, la fixation est réalisée par soudage par miroir c'est à dire à l'aide d'une pièce intermédiaire chauffante que l'on retire après.

L'étanchéité de la chambre hydraulique 20 par rapport à l'extérieur est ici assurée par deux joints dynamiques d'étanchéité avant 59A et arrière 59C qui, conformément à une caractéristique de l'invention, sont portés par la pièce centrale 17B du corps de cylindre 17 et qui coopèrent chacun avec la périphérie externe de la chemise de piston 42, c'est-à-dire avec la surface cylindrique externe de cette chemise de piston 42.

Chaque joint dynamique d'étanchéité avant 59A et arrière 59C est ici une coupelle d'étanchéité à lèvre qui est montée dans un logement complémentaire 123A, 123C formé dans la partie centrale massive 54 de la pièce centrale 17B et qui est ouvert radialement vers l'intérieur de manière que chaque joint dynamique 59A, 59C puisse coopérer par sa lèvre radialement intérieure avec la surface cylindrique externe de la chemise de piston 42. A titre de variante, chaque joint dynamique peut être un joint composite d'étanchéité.

La pièce centrale 17B fait ainsi fonction, par sa partie centrale massive 54, de boîte à joints qui porte ici deux joints dynamiques d'étanchéité, un seul joint dynamique d'étanchéité pouvant être prévu sans sortir du cadre de l'invention.

Le logement 123A est ouvert axialement vers l'avant de manière que le joint dynamique d'étanchéité avant 59A soit axialement en regard de la face transversale arrière 156A du tronçon tubulaire 56A.

La chemise de piston 42 présente au moins un trou 62 pour assurer une communication entre l'intérieur et l'extérieur de la chemise de piston 42.

Le trou 62 est implanté en fonction du mouvement axial du piston 21 avec sa chemise de piston 42 de part et d'autre de la lèvre du joint dynamique d'étanchéité avant 59A. Lorsque l'embrayage est engagé, le trou 62 assure une communication entre la chambre hydraulique de commande 20 et le réservoir principal externe. Lors de la manoeuvre de l'embrayage, la communication est interrompue car le trou 62 est déplacé par rapport au joint 59A, vers l'avant en considérant la figure 2.

Bien entendu, plusieurs trous 62 peuvent être prévus dans un même plan transversal pour assurer un passage de fluide plus important et éviter d'avoir recours à une orientation angulaire lors du montage, les trous 62 étant répartis angulairement de manière régulière.

La communication entre la chambre hydraulique 20 et le réservoir se fait à travers les trous 62 et l'espace annulaire axial délimité entre la surface cylindrique externe de la chemise de piston 42 et la surface cylindrique interne du trou 53 de la partie centrale massive 54 de la pièce centrale 17B.

Selon un aspect non représenté sur les figures, et afin d'éviter que du fluide ne s'échappe vers l'extérieur, il peut être prévu un soufflet d'étanchéité intervenant entre le corps de cylindre 17 et la tige de piston 33, par exemple entre la pièce centrale 17B et la tige de piston.

La présence de deux joints dynamiques d'étanchéité 59A, 59C peut toutefois permettre d'éviter d'avoir recours à un soufflet d'étanchéité complémentaire.

Dans ce cas, il peut être prévu, si nécessaire, un capot complémentaire (non représenté) de protection de la pièce arrière 17C qui est par exemple fixé autour de la douille arrière 27C de la pièce centrale 17B et qui entoure la pièce arrière 17C et est traversé par la tige de piston 33.

Bien entendu, un tel capot de protection peut entourer un soufflet d'étanchéité.

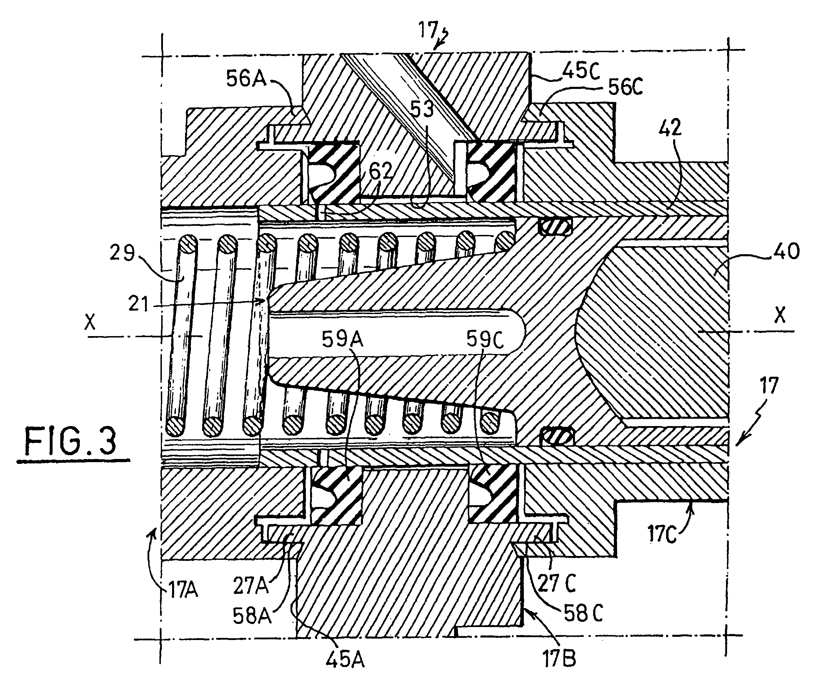

Le deuxième mode de réalisation illustré en détail à la figure 3 diffère du précédent de par l'agencement des tronçons tubulaires et des douilles complémentaires de manière à proposer un mode de réalisation plus particulièrement adapté à une opération de fixation étanche par soudage par frottement.

A cet effet, les douilles avant 27A et arrière 27C sont reçues axialement à l'intérieur de parties complémentaires des tronçons tubulaires 56A, 56C qui sont agencées radialement à l'extérieur des douilles 27A, 27C, c'est-à-dire que chacune des deux zones de soudage étanche 58A, 58C correspond à la zone d'interface entre les surfaces cylindriques externes des douilles 27A, 27C et les surfaces cylindriques internes complémentaires des parties radialement extérieures des tronçons tubulaires 56A, 56C formés à cet effet.

Le soudage étanche est ici réalisé de préférence par frottement au niveau des zones 58A et 58C. Le soudage est réalisé extérieurement par rapport aux douilles 27A, 27C par vibration et rotation relatives des pièces avant 17A et arrière 17C par rapport à la pièce centrale 17B.

A titre de variante non représentée, et sans sortir du cadre de l'invention, l'une des pièces axiales d'extrémité 17A ou 17C peut être conçue selon le premier mode de réalisation, tandis que l'autre pièce axiale d'extrémité 17C ou 17A est conçue selon le deuxième mode de réalisation.

Les deux pièces axiales d'extrémité 17A, 17C peuvent être réalisées par moulage dans le même matériau plastique ou dans un matériau plastique différent, et ceci notamment en fonction de la technique de soudage étanche utilisée pour le raccordement de chaque pièce axiale d'extrémité à la pièce centrale 17B.

Sans sortir du cadre de l'invention, il est aussi possible de concevoir les trois pièces avec une inversion mécanique, c'est-à-dire que la pièce centrale 17B comporte des tronçons tubulaires s'étendant axialement vers l'extérieur qui sont reçus dans des douilles complémentaires appartenant aux deux pièces d'extrémité axiale 17A et 17C.

En variante, la fixation est réalisée par collage. Bien entendu, on peut fixé l'une des pièces 17A, 17C par collage sur la pièce centrale 17B et fixer l'autre des pièces 17A, 17C par soudage sur la pièce 17B. Grâce à l'invention, on peut fixer par exemple les pièces 17A, 17B en un lieu de fabrication puis fixer en final la pièce 17C dans un autre lieu de fabrication. Dans tous les cas la pièce centrale constitue un porte-joint(s). Bien entendu la présence du ressort 29 n'est pas indispensable, le retour étant assuré par un ressort associé à la pédale de freinage ou d'embrayage. Le piston peut être uniquement en matière plastique et être métallisé grâce à un traitement de surface pour contact avec les joints. Par soudure par frottements on entend par exemple soudure par vibration, par rotation ou par miroir. Avantageusement les pièces 17A, 17B sont emmanchées à force dans la pièce 17C pour permettre un soudage ou un collage optimal. Bien entendu on peut procéder à un emmanchement conique. Lors du soudage la chaleur peut être appliquée directement à l'une au moins des pièces à souder.

## Revendications

1. Dispositif (10) de commande hydraulique de freinage ou d'un embrayage, notamment de véhicule automobile, comprenant au moins un cylindre comportant un corps de cylindre (17) présentant à l'avant un fond (24) et ouvert à l'arrière, un piston (21, 42) coulissant axialement dans un alésage interne (22) du corps de cylindre (17), au moins un joint dynamique d'étanchéité (59A, 59C) porté par le corps du cylindre (17, 17B) pour coopérer avec la périphérie externe (42) du piston (21), dans lequel le corps de cylindre (17) est en matière synthétique telle que de la matière plastique, et dans lequel le piston (21) présente une face avant (31) délimitant une chambre hydraulique (20), **caractérisé en ce que** le corps de cylindre (17) comporte, agencées axialement consécutivement d'avant en arrière, une pièce avant borgne (17A) comportant ledit fond (24), une pièce centrale (17B), et une pièce arrière (17C) ouverte vers l'arrière qui sont fixées entre elles de manière étanche, **en ce que** l'alésage interne (22) comporte une portion avant (22A) et une portion arrière (22C) qui sont formées dans la pièce avant (17A) et, respectivement, dans la pièce arrière (17C) du corps de cylindre (17), et **en ce que** ledit joint dynamique d'étanchéité (59A, 59C) est logé dans la pièce centrale (17B) du corps de cylindre (17).

2. Dispositif de commande selon la revendication 1, **caractérisé en ce que** ladite fixation étanche est réalisée par collage.

3. Dispositif de commande selon la revendication 1, **caractérisé en ce que** ladite fixation est réalisée par soudage avec apport indirect de chaleur.

4. Dispositif de commande selon la revendication 1, **caractérisé en ce que** la fixation étanche est une fixation par soudage par miroir.

5. Dispositif de commande selon la revendication 3, **caractérisé en ce que** ladite fixation étanche (58A, 58C) est une fixation par soudage par rayonnement infrarouge, par exemple du type laser.

6. Dispositif de commande selon la revendication 3, **caractérisé en ce que** ladite fixation étanche (58A, 58C) est une fixation par soudage par ultrasons.

7. Dispositif de commande selon la revendication 3, **caractérisé en ce que** ladite fixation étanche (58A, 58C) est une fixation par soudage par frottement.

8. Dispositif de commande selon la revendication 3, **caractérisé en ce que** ladite fixation étanche (58A, 58C) est une fixation par soudage par haute fréquence.

9. Dispositif de commande selon la revendication 3, **caractérisé en ce que** ladite fixation étanche (58A, 58C) est une fixation par soudage par induction de joints ferromagnétiques.

10. Dispositif de commande selon la revendication 1, **caractérisé en ce que** le piston (21, 42) s'étend à travers la pièce centrale (17B) du corps de cylindre (17) avec jeu radial.

11. Dispositif de commande selon la revendication 1, **caractérisé en ce qu'** un tronçon tubulaire arrière (56A), respectivement avant (56C), d'orientation axiale de la pièce avant (17A), respectivement arrière (17C), du corps de cylindre (17) est soudé à une partie avant (27A), respectivement arrière, complémentaire de la pièce centrale (17B) du corps de cylindre (17).

12. Dispositif de commande selon la revendication 3, **caractérisé en ce que** la surface périphérique externe dudit tronçon tubulaire (56A, 56C) est fixée de manière étanche par soudage avec apport indirect de chaleur à une surface périphérique interne (23A, 23C) de ladite partie complémentaire (27A, 27C) de la pièce centrale (17B) du corps de cylindre (17).

13. Dispositif de commande selon la revendication 3, **caractérisé en ce que** la surface périphérique interne dudit tronçon tubulaire (56A, 56C) est fixée de manière étanche par soudage avec apport indirect de chaleur à une surface périphérique externe de ladite partie complémentaire (27A, 27C) de la pièce centrale (17B) du corps de cylindre (17).

14. Dispositif de commande selon la revendication 13, **caractérisé en ce que** ledit tronçon tubulaire (56A, 56C) est en butée axialement contre un épaulement radial (64A, 64C) de la pièce centrale (17B) du corps de cylindre (17).

15. Dispositif de commande selon la revendication 1, **caractérisé en ce que** la pièce centrale (17B) comporte un conduit transversal (51) qui débouche, selon une direction sensiblement radiale, dans un trou central (53), d'orientation axiale, de la pièce centrale (17B, 54) en regard de la périphérie externe (42) du piston (21).

16. Dispositif de commande selon la revendication 1, **caractérisé en ce que** la pièce centrale (17B) du corps de cylindre (17) est conformée en une plaque transversale de fixation du dispositif de commande (10).

17. Dispositif de commande selon la revendication 1, **caractérisé en ce qu'** il comporte deux joints dynamiques d'étanchéité avant et arrière (59A, 59C) qui sont logés dans la pièce centrale (17B) du corps de cylindre.

18. Dispositif de commande selon la revendication précédente, **caractérisé en ce que** le joint dynamique d'étanchéité avant (59A), respectivement arrière (59C), est disposé dans un logement (123A, 123B) formé dans pièce centrale (17B) du corps de cylindre qui est ouvert radialement vers l'intérieur.

19. Dispositif de commande selon la revendication 1, **caractérisé en ce que** l'extrémité arrière de la pièce arrière (17C) du corps de cylindre comporte au moins une butée destinée à coopérer avec une extrémité arrière du piston pour limiter le déplacement axial du piston (21, 42) vers l'arrière.

20. Dispositif de commande selon la revendication 1, **caractérisé en ce que** le piston (21) comporte une chemise périphérique de piston (42) solidaire axialement du piston et qui coulisse axialement dans l'alésage interne (22, 22A, 22C) du corps de cylindre (17).

21. Dispositif de commande selon la revendication précédente, **caractérisé en ce que** la chemise de piston (42) présente au moins un trou (62) pour assurer une communication entre l'intérieur et l'extérieur de la chemise de piston (42), et **en ce que** le trou (62) est destiné à se déplacer de part et d'autre d'un joint dynamique d'étanchéité (59A).

## Patentansprüche

1. Hydraulische Betätigungsvorrichtung (10) einer Bremsanlage oder einer Kupplung, insbesondere eines Kraftfahrzeugs, die wenigstens einen Zylinder enthält, umfassend einen Zylinderkörper (17), der an der Vorderseite einen Boden (24) aufweist und an der Rückseite offen ist, einen in einer Innenbohrung (22) des Zylinderkörpers (17) axial gleitend verschiebbar gelagerten Kolben (21, 42), wenigstens eine Bewegungsdichtung (59A, 59C), die am Zylinderkörper (17, 17B) angebracht ist, um mit dem äußeren Umfang (42) des Kolbens (21) zusammenzuwirken, wobei der Zylinderkörper (17) aus einem synthetischen Werkstoff, etwa aus Kunststoff, besteht und wobei der Kolben (21) eine Vorderseite (31) aufweist, die eine Hydraulikkammer (20) begrenzt, **dadurch gekennzeichnet, dass** der Zylinderkörper (17), axial von vom nach hinten hintereinander angeordnet, einen einseitig geschlossenen vorderen Teil (17A) mit dem besagten Boden (24), einen mittleren Teil (17B) und einen nach hinten offenen hinteren Teil (17C) umfasst, die dicht aneinander befestigt sind, dass die Innenbohrung (22) einen vorderen Abschnitt (22A) und einen hinteren Abschnitt (22C) enthält, die im vorderen Teil (17A) bzw. im hinteren Teil (17C) des Zylinderkörpers (17) ausgebildet sind, und dass die besagte Bewegungsdichtung (59A, 59C) im mittleren Teil (17B) des Zylinderkörpers (17) aufgenommen ist.

2. Betätigungsvorrichtung nach Anspruch 1, **dadurch gekennzeichnet, dass** die besagte dichte Befestigung durch Verkleben erfolgt.

3. Betätigungsvorrichtung nach Anspruch 1, **dadurch gekennzeichnet, dass** die besagte Befestigung durch Schweißen mit indirekter Wärmezufuhr erfolgt.

4. Betätigungsvorrichtung nach Anspruch 1, **dadurch gekennzeichnet, dass** die dichte Befestigung eine Befestigung ist, die durch Spiegelschweißen erfolgt.

5. Betätigungsvorrichtung nach Anspruch 3, **dadurch gekennzeichnet, dass** die besagte dichte Befestigung (58A, 58C) eine Befestigung durch Schweißen mit Infrarotstrahlung, beispielsweise Laserschweißen, ist.

6. Betätigungsvorrichtung nach Anspruch 3, **dadurch gekennzeichnet, dass** die besagte dichte Befestigung (58A, 58C) eine Befestigung durch Ultraschallschweißen ist.

7. Betätigungsvorrichtung nach Anspruch 3, **dadurch gekennzeichnet, dass** die besagte dichte Befestigung (58A, 58C) eine Befestigung durch Reibschweißen ist.

8. Betätigungsvorrichtung nach Anspruch 3, **dadurch gekennzeichnet, dass** die besagte dichte Befestigung (58A, 58C) eine Befestigung durch Hochfrequenzschweißen ist.

9. Betätigungsvorrichtung nach Anspruch 3, **dadurch gekennzeichnet, dass** die besagte dichte Befestigung (58A, 58C) eine Befestigung durch Induktionsschweißen von ferromagnetischen Fugen ist.

10. Betätigungsvorrichtung nach Anspruch 1, **dadurch gekennzeichnet, dass** sich der Kolben (21, 42) mit radialem Spiel durch den mittleren Teil (17B) des Zylinderkolbens (17) hindurch erstreckt.

11. Betätigungsvorrichtung nach Anspruch 1, **dadurch gekennzeichnet, dass** ein axial ausgerichtetes hinteres (56A) bzw. vorderes (56C) rohrförmiges Teilstück des vorderen (17A) bzw. hinteren (17C) Teils des Zylinderkörpers (17) an einem formschlüssigen vorderen (27A) bzw. hinteren Bereich des mittleren Teils (17B) des Zylinderkörpers (17) angeschweißt ist.

12. Betätigungsvorrichtung nach Anspruch 3, **dadurch gekennzeichnet, dass** die äußere Umfangsfläche des besagten rohrförmigen Teilstücks (56A, 56C) durch Schweißen mit indirekter Wärmezufuhr dicht an einer inneren Umfangsfläche (23A, 23C) des besagten formschlüssigen Bereichs (27A, 27C) des mittleren Teils (17B) des Zylinderkörpers (17) befestigt ist.

13. Betätigungsvorrichtung nach Anspruch 3, **dadurch gekennzeichnet, dass** die innere Umfangsfläche des besagten rohrförmigen Teilstücks (56A, 56C) durch Schweißen mit indirekter Wärmezufuhr dicht an einer äußeren Umfangsfläche des besagten formschlüssigen Bereichs (27A, 27C) des mittleren Teils (17B) des Zylinderkörpers (17) befestigt ist.

14. Betätigungsvorrichtung nach Anspruch 13, **dadurch gekennzeichnet, dass** das besagte rohrförmige Teilstück (56A, 56C) axial an einer radialen Schulter (64A, 64C) des mittleren Elements (17B) des Zylinderkörpers (17) zum Anschlag kommt.

15. Betätigungsvorrichtung nach Anspruch 1, **dadurch gekennzeichnet, dass** der mittlere Teil (17B) einen Querkanal (51) umfasst, der entlang einer in etwa radialen Richtung in einem axial ausgerichteten mittigen Loch (53) des mittleren Teils (17B, 54) gegenüber dem äußeren Umfang (42) des Kolbens (21) mündet.

16. Betätigungsvorrichtung nach Anspruch 1, **dadurch gekennzeichnet, dass** der mittlere Teil (17B) des Zylinderkörpers (17) in Form einer Querplatte zur Befestigung der Betätigungsvorrichtung (10) gestaltet ist.

17. Betätigungsvorrichtung nach Anspruch 1, **dadurch gekennzeichnet, dass** sie zwei vordere und hintere Bewegungsdichtungen (59A, 59C) umfasst, die im mittleren Teil (17B) des Zylinderkörpers (17) aufgenommen sind.

18. Betätigungsvorrichtung nach dem vorangehenden Anspruch, **dadurch gekennzeichnet, dass** die vordere (59A) bzw. hintere (59C) Bewegungsdichtung in einer Aufnahme (123A, 123C) angeordnet ist, die im mittleren Teil (17B) des Zylinderkörpers ausgebildet ist, der radial nach innen offen ist.

19. Betätigungsvorrichtung nach Anspruch 1, **dadurch gekennzeichnet, dass** das hintere Ende des hinteren Teils (17C) des Zylinderkörpers wenigstens einen Anschlag umfasst, der dazu bestimmt ist, mit einem hinteren Ende des Kolbens zusammenzuwirken, um die axiale Verschiebung des Kolbens (21, 42) nach hinten zu begrenzen.

20. Betätigungsvorrichtung nach Anspruch 1, **dadurch gekennzeichnet, dass** der Kolben (21) eine Kolbenumfangsbuchse (42) umfasst, die axial fest mit dem Kolben verbunden und die in der Innenbohrung (22, 22A, 22C) der Zylinderkörpers (17) axial gleitend verschiebbar gelagert ist.

21. Betätigungsvorrichtung nach dem vorangehenden Anspruch, **dadurch gekennzeichnet, dass** die Kolbenbuchse (42) wenigstens ein Loch (62) aufweist, um eine Verbindung zwischen dem Innen- und Außenbereich der Kolbenbuchse (42) herzustellen, und dass das Loch (62) dazu bestimmt ist, sich beiderseits einer Bewegungsdichtung (59A) zu verschieben.

## Claims

1. Hydraulic brake or clutch control device (10), in particular for a motor vehicle, comprising at least one cylinder comprising a cylinder body (17) having an end (24) at the front and open at the rear, a piston (21, 42) sliding axially in an internal bore (22) in the cylinder (17), at least one dynamic sealing joint (59A, 59C) carried by the body of the cylinder (17, 17B) in order to cooperate with the external periphery (42) of the piston (21), in which the cylinder body (17) is made from synthetic material such as plastics material, and in which the piston (21) has a front face (31) to limiting a hydraulic chamber (20), **characterised in that** the cylinder body brackets (17) comprises, arranged axially and consecutively from front to rear, a blind front piece (17A) comprising the said end (24), a central piece (17B), and a rear piece (17C) open towards the rear, which are fixed together sealingly, and **in that** the internal bore (22) comprises a front portion (22A) and a rear portion (22C) which are formed in the front piece (17A) and, respectively, in the rear piece (17C) of the cylinder body (17), and **in that** the said dynamic sealing joint (59A, 59C) is housed in the central piece (17B) of the cylinder body (17).

2. Control device according to Claim 1, **characterised in that** the said sealed fixing is achieved by adhesive bonding.

3. Control device according to Claim 1, **characterised in that** the said fixing is achieved by welding with the indirect addition of heat.

4. Control device according to Claim 1, **characterised in that** the sealed fixing is a fixing by mirror welding.

5. Control device according to Claim 3, **characterised in that** the said sealed fixing (58A, 58C) is a fixing by infrared radiation welding, for example of the laser type.

6. Control device according to Claim 3, **characterised in that** the said sealed fixing (58A, 58C) is a fixing by ultrasonic welding.

7. Control device according to Claim 3, **characterised in that** the said sealed fixing (58A, 58C) is a fixing by friction welding.

8. Control device according to Claim 3, **characterised in that** the said sealed fixing (58A, 58C) is a fixing by highfrequency welding.

9. Control device according to Claim 3, **characterised in that** the said sealed fixing (58a, 58c) is a fixing by induction welding of ferromagnetic joints.

10. Control device according to Claim 1, **characterised in that** the piston (21, 42) extends through the central piece (17B) of the cylinder body (17) with radial clearance.

11. Control device according to Claim 1, **characterised in that** an axially oriented rear (56A) or respectively front (56C) tubular portion of the front (17A) or respectively rear (17C) piece of the cylinder body (17) is welded to a complementary front (27A) or respectively rear part of the central piece (17B) of the cylinder body (17).

12. Control device according to Claim 3, **characterised in that** the external peripheral surface of the said tubular portion (56A, 56C) is sealingly fixed by welding with indirect addition of heat to an internal peripheral surface (23A, 23C) of the said complementary part (27A, 27C) of the central piece (17B) of the cylinder body (17).

13. Control device according to Claim 3, **characterised in that** the internal peripheral surface of the said tubular portion (56A, 56C) is sealingly fixed by welding with indirect addition of heat to an external peripheral surface of the said complementary part (27A, 27C) of the central piece (17B) of the cylinder body (17).

14. Control device according to Claim 13, **characterised in that** the said tubular portion (56A, 56C) is in abutment axially against a radial shoulder (64A, 64C) on the central piece (17B) of the cylinder body (17).

15. Control device according to Claim 1, **characterised in that** the central piece (17b) comprises a transverse conduit (51) which opens out, in a substantially radial direction, in an axially oriented central hole (53) in the central piece (17B, 74) opposite the external periphery (42) of the piston (21).

16. Control device according to Claim 1, **characterised in that** the central piece (17B) of the cylinder body (17) is shaped as a transverse plate for fixing the control device (10).

17. Control device according to Claim 1, **characterised in that** it comprises two front and rear dynamic sealing joints (59A, 59C) which are housed in the central piece (17B) of the cylinder body (17).

18. Control device according to the preceding claim, **characterised in that** the front (59A) or respectively rear brackets (59C) dynamic sealing joint is disposed in a housing (123A, 123B) formed in the central piece (17B) of the cylinder body which is open radially towards the inside.

19. Control device according to Claim 1, **characterised in that** the rear end of the rear piece (17C) of the cylinder body comprises at least one stop intended to cooperate with a rear end of the piston in order to limit the axial movement of the piston (21, 42) towards the rear.

20. Control device according to Claim 1, **characterised in that** the piston (21) comprises a peripheral piston jacket (42) which is axially fixed to the piston and which slides axially in the internal bore (22, 22A, 22C) in the cylinder body (17).

21. Control device according to the preceding claim, **characterised in that** the piston jacket (42) has at least one hole (62) for providing communication between the inside and outside of the piston jacket (42), and **in that** the hole (62) is intended to move on each side of a dynamic sealing joint (59A).
